# EUROPÄISCHE PATENTSCHRIFT

(11) **EP 3 288 803 B1**
(45) Veröffentlichungstag und Bekanntmachung des Hinweises auf die Patenterteilung: **28.10.2020**
(21) Anmeldenummer: 16722807.1
(22) Anmeldetag: 25.04.2016
(51) Int. Cl.: B60R 25/24

(54) **ZUGANGS- UND FAHRBERECHTIGUNGSSYSTEM MIT ERHÖHTER SICHERHEIT GEGEN RELAISANGRIFFE DURCH NUTZUNG VON IM BERECHTIGUNGSMITTEL INTEGRIERTER BEWEGUNGSSENSORIK**
ACCESS AND TRAVEL AUTHORISATION SYSTEM WITH INCREASED SECURITY AGAINST RELAY ATTACKS BY USING A MOVEMENT SENSOR SYSTEM WHICH IS INTEGRATED INTO THE AUTHORISATION MEANS
SYSTÈME D'AUTORISATION D'ACCÈS ET DE CONDUITE PRÉSENTANT UNE PLUS GRANDE SÉCURITÉ CONTRE LES ATTAQUES PAR RELAIS, PAR L'UTILISATION D'UN DISPOSITIF DE DÉTECTION DE MOUVEMENTS INTÉGRÉ AU MOYEN D'AUTORISATION

(30) Priorität: 29.04.2015 DE 102015106621
(43) Veröffentlichungstag der Anmeldung: 07.03.2018
(73) Patentinhaber: HELLA GmbH & Co. KGaA, 59552 Lippstadt (DE)
(72) Erfinder: LUDGER, Weghaus, 59556 Lippstadt (DE)
(86) Internationale Anmeldenummer: PCT/EP2016/059179
(87) Internationale Veröffentlichungsnummer: WO 2016/173984

(56) Entgegenhaltungen:
- EP-A1- 1 721 793
- DE-A1-102014 001 303

## Beschreibung

Die Erfindung betrifft ein Berechtigungssystem für Fahrzeuge, das mindestens ein Authentifikationselement zur Erfassung einer Bewegung, Vibration und/oder Neigung und eine Vorrichtung zur Erzeugung einer Bewegung, Vibration und/oder Neigung aufweist. Ferner betrifft die Erfindung ein Verfahren zur Positionskontrolle mit einem Berechtigungssystem und einer Vorrichtung.

Aus der EP 1 721 793 ist ein System bekannt, das eine Identifikationseinrichtung aufweist, die einen Sensor zum Messen von Druckschwankungen in einem infraschallfrequenten Bereich und einen Sender zum Übertragen eines Antwortsignals an eine Zentraleinheit auf der Grundlage der Druckschwankungen aufweist. Ein Komparator vergleicht das Antwortsignal mit einem Referenzsignal, mit dem die Druckschwankungen in einem Fahrzeuginnenraum korreliert sind, um den Ort der Vorrichtung innerhalb oder außerhalb eines Fahrzeugs zu bestimmen.

Des Weiteren erfordern bekannte Berechtigungssysteme für Fahrzeuge, wie z. B. sog. passive schlüssellose Systeme oder sog. hands-free entry/go Systeme bzw. Keyless Entry Systeme, es nicht, ein Berechtigungsmittel bzw. einen Schlüssel in die Hand zu nehmen, um bestimmte Aktionen auszulösen.

So ist es mit derartigen Systemen beispielsweise möglich, ein Fahrzeug ohne aktive Benutzung eines Berechtigungsmittels bzw. Autoschlüssels zu entriegeln und durch das bloße Betätigen eines Startknopfes zu starten. Ermöglicht wird dies durch das Berechtigungsmittel bzw. einen Keyless-Entry-Schlüssel mit einem Chip, den der Nutzer mit sich führt.

Bei Systemen aus dem Stand der Technik sendet das Fahrzeug ein schwaches Signal mit einer Reichweite von wenigen Metern, das das Berechtigungsmittel empfängt. Das Berechtigungsmittel sendet daraufhin ein Signal an das Fahrzeug, das das Fahrzeug dazu benutzt, zu entscheiden, ob es sich um ein autorisiertes Berechtigungsmittel handelt und ob darauf basierend Zugangs- bzw. Fahrberechtigungsbefehle umgesetzt werden können.

Solche Berechtigungssysteme setzen also keine bewusste Nutzerinteraktion am Berechtigungsmittel mehr voraus, sondern überprüfen nur, ob das Berechtigungsmittel in den Momenten, in denen eine Überprüfung der Autorisierung erfolgen soll, in unmittelbarer Nähe zum Auto - im Falle des Zuganges - bzw. im Auto - im Falle einer Fahrberechtigung - ist.

Im Kontext dieser Berechtigungs- bzw. Keyless Entry Systeme rücken Angriffsszenarien, die eben auf spezielle Eigenschaften der damit verbundenen Technologien zurückgreifen, in den Vordergrund.

So sind mittlerweile Angriffsszenarien bekannt, bei denen die zugehörige Funkstrecke des Berechtigungssystems bzw. die Funkstrecke zwischen Schlüssel und Fahrzeug verlängert wird. Hierbei handelt es sich um sog. Relaisangriffe bzw. relay station attacks (RSA).

Bei einem derartigen Relaisangriff wird das Signal des Fahrzeugs zum Berechtigungsmittel mittels eines Antennenpaares weitergeleitet bzw. verlängert. Dabei muss eine Antenne/eine Relaisstation nah (typsicherweise weniger als 2 Meter) am Fahrzeug sein und die andere Antenne/Relaisstation nah an dem autorisierten Berechtigungsmittel (typischerweise weniger als 2 Meter). Die Distanz zwischen den beiden Relaisstationen (Funkstreckenverlängerungsstationen) kann dabei sehr groß sein und ist lediglich abhängig von der konkreten Implementierung der Relaisstationen, deren Ziel typischerweise krimineller Natur ist und bei denen man auch nicht davon ausgehen kann, dass regulatorische Bestimmungen einschränkend wirken.

Folglich kann das Fahrzeug mittels eines Relaisangriffs geöffnet bzw. gestartet werden, obwohl sich das zugehörige Berechtigungsmittel außerhalb der üblichen Distanz für eine Öffnung bzw. Fahrberechtigung des Fahrzeugs befindet.

Der Erfindung liegt daher die Aufgabe zu Grunde, ein Berechtigungssystem für Fahrzeuge sowie ein Verfahren zur Positionskontrolle mit einem Berechtigungssystem anzugeben, bei denen mit geringem technischem Aufwand und auf einfache Weise eine Relaisattacke unterbunden werden kann und das Gesamtkonzept der Keyless Entry Systeme für einen Nutzer erhalten bleibt.

Die Aufgabe wird erfindungsgemäß insbesondere durch die Merkmale der unabhängigen Patentansprüche gelöst. Weitere vorteilhafte Weiterbildungen der vorliegenden Erfindung sind Gegenstand der Unteransprüche.

Bei einem ersten Aspekt der Erfindung ist es vorgesehen, dass ein Berechtigungssystem für Fahrzeuge mindestens ein Authentifikationselement zur Erfassung einer Bewegung, Vibration und/oder Neigung und eine Vorrichtung zur Erzeugung einer Bewegung, Vibration und/oder Neigung aufweist.

In der gesamten Beschreibung wird vorzugsweise unter einer Bewegung eine geradlinige Bewegung entlang einer Bahn, die allerdings auch eine oder mehrere Krümmungen aufweisen kann, verstanden. Auch wird unter Bewegung die Änderung des Ortes eines Beobachtungsobjektes mit der Zeit verstanden.

Unter einer Vibration wird vorzugsweise eine Schwingung verstanden, die beispielsweise durch einen Motor oder durch einen Aktor erzeugt wird. Auch wird unter Vibration eine periodische oder nicht-periodische Schwingung verstanden.

Unter dem Begriff Neigung wird in der Beschreibung eine Winkellage eines Gegenstandes bezüglich eines anderen Gegenstandes bzw. bezüglich einer Ebene, welche auch frei definierbar ist, verstanden. Günstigerweise wird als definierbare Ebene die Erdoberfläche gewählt.

Vorzugsweise handelt es sich bei dem Authentifikationselement um einen Schlüssel, ein Keyless-Go-Mittel für ein Fahrzeug oder einen Keyless-Entry-Schlüssel. Es ist aber auch möglich, dass das Authentifikationselement mit einem Mobilgerät, wie einem Mobiltelefon, einem Tablet, einem Notebook und/oder einem anderen mobilen bzw. tragbaren Gerät realisiert ist.

Vorteilhafterweise weist das Authentifikationselement eine Funkschnittstelle zum Senden und Empfangen eines Authentifikationssignals und vorzugsweise ein Sensorelement zur Erfassung einer Bewegung, Vibration und/oder Neigung auf. Auf diese Weise kann zum einen eine Funkverbindung über die Funkschnittstelle aufgebaut werden und zum anderen eine Bewegung, Vibration und/oder Neigung des Authentifikationselements erfasst werden.

Bevorzugterweise ist die Vorrichtung fahrzeugseitig, insbesondere in oder an einem Automobil, angeordnet. Somit ist die Vorrichtung mit dem Fahrzeug verbunden und kann beispielsweise eingesetzt werden, dieses zu öffnen und/oder zu starten.

Dabei ist es von Vorteil, wenn die Vorrichtung mindestens einen Aktor zur Erzeugung einer Bewegung, Vibration und/oder Neigung und vorzugsweise eine Funkeinrichtung zum Senden und Empfangen eines Authentifikationssignals aufweist. Dies ermöglicht es aktiv eine Bewegung, Vibration und/oder Neigung, insbesondere als Authentifikationssignal, zu erzeugen. Ferner kann mittels der Funkeinrichtung eine Funkverbindung etabliert werden, um zu kommunizieren bzw. um Daten auszutauschen. Konkret ausgestaltet kann es sich bei dem mindestens einen Aktor um den Motor eines Fahrzeuges und/oder um einen Lautsprecher und/oder um einen elektrisch steuerbaren Sitz und/oder eine elektrisch steuerbare Federung/Niveauregelung und/oder eine elektrisch steuerbare Lenkung und/oder eine elektrisch steuerbare Türe und/oder ein elektrisch steuerbares Schiebedach und/oder eine elektrisch steuerbare Scheibe handeln.

Ferner ist es günstig, wenn der mindestens eine Aktor an einem Übertragungsmittel, insbesondere an einem Fahrzeug, angeordnet ist, um ein Authentifikationssignal durch Bewegung, Vibration und/oder Neigung zu erzeugen und vorzugsweise an das Authentifikationselement zu übertragen. Dies erlaubt das Erzeugen eines einzigartigen Signals, das für das Fahrzeug charakteristisch ist und dieses eindeutig kennzeichnet.

Vorteilhafterweise weist das Sensorelement des Authentifikationselements zur Erfassung einer Bewegung, Vibration und/oder Neigung mindestens einen Beschleunigungssensor und/oder mindestens einen Drehratensensor und/oder mindestens einen Neigungsmesser auf. Dies ermöglicht es dem Sensorelement, Beschleunigungen und somit auch Kräfte, sowie die Rotationsgeschwindigkeit aber auch die Neigung zu erfassen, wodurch die Bewegung und Lage des Authentifikationselements bzw. auch eines Fahrzeuges im Raum erfassbar ist.

Auch ist es von Vorteil, wenn die Vorrichtung zusätzlich eine Sensoreinrichtung zur Erfassung einer Bewegung, Vibration und/oder Neigung aufweist. Somit kann auch die Vorrichtung Beschleunigungen bzw. Kräfte, sowie die Rotationsgeschwindigkeit aber auch die Neigung erfassen, wodurch die Bewegung und Lage der Vorrichtung im Raum erfassbar ist.

Vorzugsweise weist die Sensoreinrichtung mindestens einen Beschleunigungssensor und/oder mindestens einen Drehratensensor und/oder mindestens einen Neigungsmesser auf. Diese konkrete Ausgestaltung erlaubt das Erfassen der Bewegung und Lage der Vorrichtung im dreidimensionalen Raum.

Ferner ist es von Vorteil, wenn der mindestens eine Beschleunigungssensor eine lineare Beschleunigung in mindestens eine Raumrichtung erfasst. Vorzugsweise weist das Sensorelement und/oder die Sensoreinrichtung drei Beschleunigungssensoren auf, die günstigerweise orthogonal zueinander angeordnet sind. Somit können Beschleunigungen im Raum und folglich die räumliche Bewegung des Beschleunigungssensors erfasst werden.

Auch ist es von Vorteil, wenn der mindestens eine Drehratensensor eine Winkelgeschwindigkeit um mindestens eine Raumrichtung erfasst. Vorzugsweise weist das Sensorelement und/oder die Sensoreinrichtung drei Drehratensensoren auf, die bevorzugterweise orthogonal zueinander angeordnet sind. Auf diese Weise kann die Winkelgeschwindigkeit entlang einer Drehachse gemessen werden, wobei beispielsweise durch Integration errechenbar ist, um welchen Winkel sich ein Körper bzw. die Vorrichtung oder das Authentifikationselement innerhalb einer Zeit gedreht hat. Auch kann mittels des mindestens einen Drehratensensors die Gierrate (Drehung um Hochachse), die Nickrate (Drehung um Querachse) und die Wankrate/Rollrate (Drehung um Längsachse) erfasst werden.

Auch ist es bevorzugt, dass der mindestens eine Neigungsmesser eine Steigung oder einen Winkel in mindestens eine Raumrichtung erfasst. Vorzugsweise weist das Sensorelement und/oder die Sensoreinrichtung drei Neigungsmesser aufweist, die bevorzugterweise orthogonal zueinander angeordnet sind. Dies erlaubt es, die Neigung bzw. das Gefälle bzw. die Steigung bzw. einen relativen Winkel eines Körpers in Bezug auf eine Ebene zu erfassen.

Ferner ist es günstig, wenn die Vorrichtung eine Steuerungseinrichtung, insbesondere eine Steuerungselektronik aufweist, die vorzugsweise mit dem mindestens einen Aktor, mit der Sensoreinrichtung und/oder mit der Funkeinrichtung verbunden ist. Auf diese Weise wird es der Steuerungseinrichtung ermöglicht, den mindestens einen Aktor, die Sensoreinrichtung und die Funkeinrichtung zu steuern und anzuweisen.

Auch ist es bevorzugt, dass die Steuerungseinrichtung eine Funktionslogik zur Verarbeitung von Authentifikationssignalen und eine Signalerzeugungs- und -erfassungseinrichtung zum Erzeugen und Erfassen einer Bewegung, Vibration und/oder Neigung aufweist. Somit können die Aufgaben der Steuerungseinrichtung auf einzelne Teilelemente verteilt werden, die auf die jeweilige Aufgabe spezialisiert sind. Dadurch ist es möglich, die einzelnen Steuerungsaufgaben der Steuerungseinrichtung schneller und effektiver handzuhaben.

Des Weiteren ist es bevorzugt, dass die Steuerungseinrichtung, insbesondere die Signalerzeugungs- und -erfassungseinrichtung, den mindestens einen Aktor ansteuert, um eine Bewegung, Vibration und/oder Neigung zu erzeugen. Somit kann die Steuerungseinrichtung den mindestens einen Aktor anweisen, gezielt eine Bewegung, Vibration und/oder Neigung zu erzeugen, um ein Authentifikationssignal zu erzeugen.

Vorzugsweise erfasst die Sensoreinrichtung die erzeugte Bewegung, Vibration und/oder Neigung. Dadurch wird die Möglichkeit geschaffen, die erzeugte Bewegung, Vibration und/oder Neigung von der Vorrichtung, die die Bewegung, Vibration und/oder Neigung erzeugt hat, zu erfassen, um beispielsweise einen Referenzwert zur Verifikation mit dem Authentifikationssignal des Authentifikationselements zur Verfügung zu stellen.

Dabei ist es günstig, wenn die Funktionslogik über die Signalerzeugungs- und - erfassungseinrichtung den mindestens einen Aktor ansteuert, um ein vorbestimmtes und/oder zufallsbedingtes Authentifikationssignal in Bewegung, Vibration und/oder Neigung umzuwandeln und zu erzeugen. Somit kann gezielt eine Bewegung, Vibration und/oder Neigung geschaffen werden, die als Authentifikationssignal dient. Mittels des vorbestimmten Anteils des Authentifikationssignals ist es möglich, gezielt eine Bewegung, Vibration und/oder Neigung vorzugeben, wobei zusammen mit dem zufallsbedingten Anteil des Authentifikationssignals ein individuelles und sehr spezifisches Authentifikationssignal geschaffen werden kann. Folglich kann insbesondere mit dem zufallsbedingten Anteil bzw. dem zufallsbedingten Authentifikationssignal ein Signal erzeugt werden, das bei jedem Erzeugen unterschiedlich ausgebildet ist. Somit kann ein wirksamer Schutz für fremden Zugriff zur Verfügung gestellt werden.

Des Weiteren ist es von Vorteil, wenn das Authentifikationselement ferner eine Signalverarbeitungs- und -weiterleitungseinrichtung aufweist, die vorzugsweise eine von dem Sensorelement erfasste Bewegung, Vibration und/oder Neigung in ein Authentifikationssignal umwandelt. Dies erlaubt es, ein analoges Signal wie Bewegung, Vibration und/oder Neigung in ein digitales zu übertragen.

Vorzugsweise leitet die Signalverarbeitungs- und -weiterleitungseinrichtung das Authentifikationssignal über die Funkschnittstelle an die Funkeinrichtung der Vorrichtung weiter. Somit gelangt die erzeugte Bewegung, Vibration und/oder Neigung nach dem Erfassen durch das Sensorelement des Authentifikationselements, vorzugsweise als digitales Signal, von dem Authentifikationselement zur Vorrichtung. Diese Kommunikation über Funkschnittstelle und Funkeinrichtung erfolgt vorzugsweise verschlüsselt.

Günstigerweise vergleicht die mit der Funkeinrichtung verbundene Steuerungseinrichtung, insbesondere die Funktionslogik, das von der Funkeinrichtung empfangene Authentifikationssignal in der Funktionslogik mit dem von der Sensoreinrichtung erfassten Authentifikationssignal und/oder mit dem von der Funktionslogik erzeugten vorbestimmten und/oder zufallsbedingten Authentifikationssignal. Durch den Vergleich kann verifiziert werden, dass sich das Authentifikationselement und die Vorrichtung örtlich betrachtet in einem benachbarten Bereich aufhalten bzw. dass das Authentifikationselement innerhalb eines Fahrzeuges, an welchem die Vorrichtung vorzugsweise angeordnet ist, positioniert ist.

Bei einem zweiten Aspekt der Erfindung ist es vorgesehen, ein Verfahren zur Positionskontrolle mit einem Berechtigungssystem anzugeben, wobei das Berechtigungssystem mindestens ein Authentifikationselement zur Erfassung einer Bewegung, Vibration und/oder Neigung und eine Vorrichtung zur Erzeugung einer Bewegung, Vibration und/oder Neigung umfasst.

Es wird ausdrücklich darauf hingewiesen, dass die Merkmale des Berechtigungssystem und insbesondere des Authentifikationselements sowie der Vorrichtung, wie sie unter dem ersten Aspekt der Erfindung erwähnt wurden, einzeln oder miteinander kombinierbar bei dem Verfahren zur Positionskontrolle Anwendung finden können.

Anders ausgedrückt, die oben unter dem ersten Aspekt der Erfindung genannten Merkmale betreffend das Berechtigungssystem mit dem Authentifikationselement und der Vorrichtung können auch hier unter dem zweiten Aspekt der Erfindung mit weiteren Merkmalen kombiniert werden.

Ein Schritt weist ein Erzeugen von Authentifikationssignalen in Form einer Bewegung und/oder einer Vibration durch die Vorrichtung auf. Dadurch kann ein Authentifikationselement in oder entlang eines Körpers transportiert werden.

Ein weiterer Schritt weist ein Erfassen der Authentifikationssignale durch das Authentifikationselement auf. Somit werden die von der Vorrichtung erzeugten Signale von dem Authentifikationselement empfangen, insbesondere dann, wenn sich dieses an oder in einem Übertragungselement der Vorrichtung befindet, sodass eine Bewegung und/oder eine Vibration empfangbar sind.

Ferner umfasst das Verfahren ein Übermitteln der erfassten Authentifikationssignale von dem Authentifikationselement an die Vorrichtung. Auf diese Weise gelangen die von dem Authentifikationselement empfangenen bzw. erfassten Signale zurück zur Vorrichtung.

Ein weiterer Schritt umfasst ein Vergleichen der erzeugten Authentifikationssignale mit den erfassten Authentifikationssignalen in der Vorrichtung. Somit kann eine Verifikation vorgenommen werden, ob das Authentifikationselement in der Nähe bzw. im Bewegungsbereich und/oder Vibrationsbereich der Vorrichtung positioniert ist.

Bei einem positiven Vergleich ist die Position des Authentifikationselements auf den Bewegungs- und/oder Vibrationsbereich der Vorrichtung bestimmbar.

Auch ist es von Vorteil, wenn beispielsweise bei einem positiven Vergleich eine Funktion, insbesondere die Erlaubnis zum Bewegen eines Fahrzeuges, freigeschaltet wird. Somit kann also eine positive Authentifikation bzw. Verifikation eine direkte Auswirkung auf ein Fahrzeug haben.

Auch ist bei einem negativen Vergleich die Position des Authentifikationselements unbekannt. Anders ausgedrückt, ist es günstig, dass bei einem negativen Vergleich eine Sicherheitsfunktion, insbesondere eine akustische und/oder optische Warnung, aktiviert wird. Dadurch kann die Vorrichtung auf einen unberechtigten Zugriff aufmerksam machen. Auch kann bei einem negativen Vergleich eine Fahrberechtigung für ein Fahrzeug entzogen und geeignete Maßnahmen eingeleitet werden, wie z. B. Motor ausschalten, oder Fahrgeschwindigkeit auf eine sehr kleine Geschwindigkeit begrenzen oder optisch/akustisch Aufmerksamkeit erzeugen oder über bestehende Funkkanäle eine Warnung an die Polizei oder den Besitzer absetzen.

Bei dem Schritt des Erzeugens von Authentifikationssignalen in Form einer Bewegung und/oder einer Vibration umfasst dieser ein Ansteuern des mindestens einen Aktors der Vorrichtung, um Bewegung und/oder Vibration zu erzeugen. Somit können Bewegungen und/oder Vibrationen auf einfache Weise mithilfe eines Aktors erzeugt werden.

Auch ist es von Vorteil, wenn das Erfassen der Authentifikationssignale ein Erfassen durch die Signalverarbeitungs- und -weiterleitungseinrichtung des Authentifikationselements mithilfe des Sensorelements umfasst. Somit können einzelne Aufgaben des Authentifikationselements auf separate Teileinrichtungen, wie die Signalverarbeitungs- und -weiterleitungseinrichtung, verteilt werden, wobei die Verarbeitungsgeschwindigkeit der Signale und somit des gesamten Authentifikationselements erhöht werden kann.

Des Weiteren ist es von Vorteil, wenn das Übermitteln der erfassten Authentifikationssignale das Übermitteln von der Signalverarbeitungs- und -weiterleitungseinrichtung an die Steuerungseinrichtung, insbesondere an die Funktionslogik, über eine Funkverbindung von Funkschnittstelle und Funkeinrichtung umfasst. Auf diese Weise kann nach dem Erfassen der Authentifikationssignale als Bewegung und/oder Vibration das Authentifikationselement die Authentifikationssignale an die Vorrichtung funken.

Des Weiteren ist es günstig, wenn das Vergleichen der erzeugten Authentifikationssignale mit den erfassten Authentifikationssignalen das Vergleichen der Signale in der Steuerungseinrichtung, insbesondere in der Funktionslogik, umfasst. Somit kann das von der Vorrichtung erzeugte Signal mit dem von dem Authentifikationselement erfassten Signal verglichen werden.

Bei den nachfolgenden drei Schritten Verbinden, Synchronisieren und Aktivieren ist es von Vorteil, wenn diese vorzugsweise vor dem Erzeugen von Authentifikationssignalen ausgeführt werden.

Der bevorzugte Schritt Verbinden umfasst ein Verbinden der Vorrichtung mit dem Authentifikationselement durch Aufbauen einer Funkverbindung. Somit kann eine Funkverbindung zwischen Vorrichtung und Authentifikationselement etabliert werden, um beispielsweise Signale von einem zum anderen per Funk zu versenden.

Vorzugsweise umfasst der Schritt Synchronisieren ein Synchronisieren der Zeit zwischen Authentifikationselement und Vorrichtung über die bestehende Funkverbindung. Somit kann gewährleistet werden, dass sowohl in dem Authentifikationselement als auch in der Vorrichtung die Uhren bzw. die Zeiterfassung synchron abläuft.

Vorzugsweise umfasst der Schritt des Aktivierens ein Aktivieren des Sensorelements des Authentifikationselements. Dadurch ist es möglich, das Sensorelement nur dann mit Energie zu versorgen, wenn dieses benötigt wird. Dadurch kann beispielsweise die Lebensdauer einer Batterie im Authentifikationselement verlängert werden.

Für den Schritt des Verbindens der Vorrichtung mit dem Authentifikationselement ist es von Vorteil, wenn dieser ein Verbinden der Steuerungseinrichtung der Vorrichtung mit der Signalverarbeitungs- und -weiterleitungseinrichtung des Authentifikationselements durch Aufbauen einer Funkverbindung zwischen der Funkschnittstelle des Authentifikationselements und der Funkeinrichtung der Vorrichtung umfasst. Somit können also die Signalverarbeitungs- und -weiterleitungseinrichtung und die Vorrichtung miteinander über Funk kommunizieren und beispielsweise Daten und/oder Signale austauschen.

Des Weiteren ist es von Vorteil, wenn das Verbinden der Steuerungseinrichtung mit der Funkschnittstelle durch Aktivieren eines Triggerelements der Vorrichtung initiiert wird. Hierfür weist die Vorrichtung vorzugsweise ferner ein Triggerelement auf. Auf diese Weise kann mit dem Triggerelement ein Anstoß zum Aufbauen einer Funkverbindung gegeben werden, ohne dass diese permanent versucht wird aufzubauen.

Auch ist es günstig, wenn das Synchronisieren der Zeit zwischen Authentifikationselement und Vorrichtung ein Synchronisieren der Zeit zwischen Funktionslogik der Vorrichtung und der Signalverarbeitungs- und -weiterleitungseinrichtung des Authentifikationselements über die bestehende Funkverbindung umfasst. Somit übernehmen als speziell dafür geeignete Elemente die Funktionslogik und die Signalverarbeitungs- und -weiterleitungseinrichtung die Zeitsynchronisierung, wodurch vorzugsweise die Zeit in beiden gleich abläuft. Umgangssprachlich ausgedrückt, werden bei dem Schritt des Synchronisierens der Zeit die Uhren verglichen und aufeinander abgestimmt. Auch ist es von Vorteil, wenn das Aktivieren des Sensorelements des Authentifikationselements ein Aktivieren des Sensorelements durch die Signalverarbeitungs- und - weiterleitungseinrichtung umfasst. Somit kann mithilfe der Signalverarbeitungs- und - weiterleitungseinrichtung das Sensorelement gezielt angesteuert werden, um im Falle keiner Funkverbindung beispielsweise Energie im Authentifikationselement einzusparen.

Des Weiteren ist es bevorzugt, wenn beim Erzeugen von Authentifikationssignalen der mindestens eine Aktor durch die Steuerungseinrichtung gesteuert wird. Somit kann die Steuerungseinrichtung den mindestens einen Aktor auf genaue Art und Weise anweisen eine Bewegung und/oder Vibration zu erzeugen.

Vorzugsweise steuert die Signalerzeugungs- und -erfassungseinrichtung der Vorrichtung gemäß Anweisung der Funktionslogik den mindestens einen Aktor an, um ein Authentifikationssignal in eine Bewegung und/oder Vibration umzuwandeln. Dies erlaubt eine vorbestimmbare und vorgebare Erzeugung von Bewegung und/oder Vibration in der Vorrichtung durch die Funktionslogik.

Auch ist es bevorzugt, wenn beim Erzeugen von Authentifikationssignalen der mindestens eine Aktor zu einem definierten Zeitpunkt gestartet wird. So kann der beispielsweise Anfangszeitpunkt, bei dem mit der Erzeugen begonnen wird, exakt festgelegt werden, wodurch unter Bezug auf diesen definierten Zeitpunkt bzw. definierbaren Anfangszeitpunkt die Bewegung und/oder Vibration erfassbar wird.

Des Weiteren ist es von Vorteil, wenn beim Erfassen der Authentifikationssignale die Signalverarbeitungs- und -weiterleitungseinrichtung die von dem Sensorelement erfassten Authentifikationssignale in Abhängigkeit der synchronisierten Zeit erfasst. Dadurch kann vorzugsweise in Kombination mit der Synchronisierung der Zeit eine exakte Erfassung der Bewegung und/oder Vibration in Abhängigkeit der Zeit gewährleistet werden.

Zudem ist es günstig, wenn das Erfassen von Authentifikationssignalen innerhalb eines vorgegebenen Zeitfensters erfolgt. Somit ist vorherbestimmbar, in welcher Zeitspanne eine Bewegung und/oder Vibration zu erfassen ist.

Ferner ist es bevorzugt, wenn der Schritt des Vergleichens auch einen Vergleich der Authentifikationssignale in Abhängigkeit der Zeit umfasst. Somit kann unter Zuhilfenahme der Zeit ein weiterer Parameter für den Vergleich genutzt werden, um eine Positionskontrolle effektiv zu gestalten. Denn wenn die erfasste Bewegung und/oder Vibration zwar mit der erzeugten übereinstimmt, jedoch der zeitliche Versatz der Bewegung und/oder Vibration zwischen erfassten und erzeugten Authentifikationssignal einen bestimmbaren Wert überschreitet, so ist z. B. ein Relaisangriff erkennbar.

Auch ist es bevorzugt, dass nachfolgende Schritte des Erzeugens und des Erfassens zusätzlich zu den oben erwähnten Schritten Erzeugen und Erfassen der/von Authentifikationssignalen ausgeführt werden.

So ist es günstig, wenn ein weiterer bevorzugter Schritt ein Erzeugen von Authentifikationssignalen durch Auslesen der Steigung oder des Winkels aus der Sensoreinrichtung der Vorrichtung umfasst. Dadurch kann ein weiterer oder alternativer Parameter zur Authentifikation geschaffen werden, der das Verfahren zur Positionskontrolle sicherer bzw. effektiver gestaltet.

Bevorzugt ist es, wenn ein Schritt ein Erfassen von Authentifikationssignalen durch Auslesen der Steigung oder des Winkels aus dem Sensorelement des Authentifikationselements aufweist. Dies gestattet zusätzlich zur Erfassung der Steigung oder des Winkels bzw. der Neigung durch die Sensoreinrichtung der Vorrichtung auch die Erfassung der Steigung oder des Winkels bzw. der Neigung durch das Sensorelement. Dadurch kann also ein weiterer Parameter geschaffen werden, der zur Positionskontrolle von Authentifikationselement und Vorrichtung herangezogen werden kann.

Ferner ist es günstig, wenn nachfolgende Schritte des Vergleichens zusätzlich zu dem Schritt des Vergleichens der Authentifikationssignale ausgeführt werden.

So ist es günstig, wenn ein weiterer bevorzugter Schritt ein Vergleichen der durch die Sensoreinrichtung erzeugten Authentifikationssignale der Vorrichtung mit den durch das Sensorelement erfassten Authentifikationssignalen des Authentifikationselements umfasst. Bei den Authentifikationssignalen handelt es sich vorzugsweise um eine Neigung, es ist aber auch denkbar, dass die eine Authentifikationssignale ferner eine Bewegung und/oder eine Vibration umfassen. Somit kann auf einfache Weise verglichen werden, ob sich das Authentifikationselement im Wirkungsbereich der durch die Vorrichtung erzeugten Authentifikationssignale, insbesondere im Bereich mit ähnlicher Neigung, befindet.

Vorzugsweise findet er Vergleich bzw. wird der Schritt des Vergleichens in der Steuerungseinrichtung, insbesondere in der Funktionslogik, ausgeführt. Dadurch findet eine Aufgabenteilung einzelner Aufgaben auf einzelne Elemente bzw. Vorrichtungen statt, womit z. B. eine Geschwindigkeitssteigerung einhergehen kann.

Vorteilhafterweise ist bei einem positiven Vergleich die Position des Authentifikationselements auf einen Bereich mit im Wesentlichen derselben Neigung, insbesondere zu der Vorrichtung, bestimmbar.

Mit im Wesentlichen wird eine Abweichung um eine identische Neigung verstanden. Diese Abweichung umfasst, so wird hier der Wortlaut "im Wesentlichen" verstanden, +/- 8 Prozent, insbesondere +/- 3 Prozent, vorteilhafterweise weniger.

Auch ist es von Vorteil, wenn beispielsweise bei einem positiven Vergleich eine Funktion, insbesondere die Erlaubnis zum Bewegen eines Fahrzeuges, freigeschaltet wird. Somit kann also eine positive Authentifikation bzw. Verifikation eine direkte Auswirkung auf ein Fahrzeug haben.

Auch ist es bevorzugt, wenn bei einem negativen Vergleich die Position des Authentifikationselements unbekannt ist bzw. als unbekannt eingestuft wird. Anders ausgedrückt, ist es günstig, wenn bei einem negativen Vergleich eine Sicherheitsfunktion, insbesondere eine akustische und/oder optische Warnung, aktiviert wird. Dadurch kann die Vorrichtung auf einen unberechtigten Zugriff aufmerksam machen.

Des Weiteren ist es von Vorteil, wenn der Schritt des Erzeugens von Authentifikationssignalen durch Aktivieren des mindestens einen Aktors eine bestimmbare Variation der durch den mindestens einen Aktor erzeugten Bewegung in der Zeit, der Amplitude und/oder der Frequenz umfasst. Somit kann eine Bewegung und/oder Vibration als Authentifikationssignal eine Modulation hinsichtlich Zeit, Amplitude und Frequenz aufweisen, wodurch eine Vielzahl unterschiedlicher zu erzeugender Authentifikationssignale möglich wird.

Vorteilhafterweise umfasst der Schritt des Übermittelns der Authentifikationssignale eine Verschlüsselung und/oder Komprimierung der Authentifikationssignale. Somit ist ein weiterer Schutzmechanismus gegen Manipulation in das erfindungsgemäße Verfahren implementierbar.

Auch ist es günstig, wenn beim Vergleichen der Authentifikationssignale des Authentifikationselements mit den Authentifikationssignalen der Vorrichtung beide Signaldaten übereinstimmen, wenn die Authentifikationssignale des Authentifikationselements innerhalb eines definierbaren Toleranzbereichs um die Authentifikationssignale der Vorrichtung liegen. Auf diese Weise ist es möglich, dass bereits dann eine positive Authentifikation vorliegt, wenn die erfassten und erzeugten Authentifikationssignale innerhalb eines definierbaren Toleranzbereichs zueinander liegen. Idealerweise ist dieser Toleranzbereich klein zu halten, um die Sicherheit gegen Angriffe zu erhöhen.

Auch ist es günstig, wenn nach Vergleichen der Authentifikationssignale die Funkverbindung zwischen der Funkschnittstelle und der Funkeinrichtung getrennt wird. Dadurch ist Energie, insbesondere im Authentifikationselement, einsparbar.

Ferner ist es von Vorteil, wenn das Sensorelement des Authentifikationselements durch die Signalverarbeitungs- und -weiterleitungseinrichtung deaktiviert wird. Dies spart ebenfalls Energie, insbesondere im Authentifikationselement, wodurch die Lebensdauer der Energieversorgung, insbesondere einer Batterie, im Authentifikationselement erhöht wird.

Auch ist es günstig, wenn die Funkschnittstelle und/oder die Funkeinrichtung im 434/315MHz oder 2.4GHz ISM Band operieren, wobei bei Realisation des Authentifikationselements als Mobiltelefon vorzugsweise die Bluetooth Low Energy Schnittstelle zum Einsatz kommt.

Damit die Übertragung von Bewegung und/oder Vibration von der Vorrichtung auf das Authentifikationselement funktioniert, ist es bevorzugt, dass sich das Authentifikationselement innerhalb eines Fahrzeuges befindet, an welchem die Vorrichtung angeordnet ist.

Betreffend das Verfahren kann dieses zu diversen Zeitpunkten durchgeführt werden. So ist es beispielswiese möglich, das Verfahren vor aber auch während einer Fahrt mit einem Fahrzeug durchzuführen. Somit kann zu jedem beliebigen Zeitpunkt das Verfahren zur Positionskontrolle mithilfe eines Berechtigungssystems durchgeführt werden.

Ferner ist es für das Verfahren von Vorteil, wenn das Authentifikationselement in einem Fahrzeug angeordnet ist, an welchem ebenfalls die Vorrichtung angeordnet ist. Anders ausgedrückt ist es günstig, wenn sich das Authentifikationselement in einem Fahrzeuginneren befindet, um eine Bewegung, Vibration und/oder Neigung von dem mindestens einen Aktor der Vorrichtung zu erfassen, wobei vorzugsweise die Vorrichtung ebenfalls am Fahrzeug oder im Fahrzeuginneren angeordnet ist.

Ferner ist es günstig, wenn das hier beschrieben Verfahren ergänzend bzw. zusätzlich bei anderen Verfahren zur Positionskontrolle zum Einsatz kommt, insbesondere bei solchen Verfahren, die bereits aus dem Stand der Technik bekannt sind. Dadurch kann also mit geringem Aufwand ein bereits bestehendes Keyless-Entry System bzw. ein existierendes Keyless-Entry Verfahren mit der vorgestellten Erfindung verbessert werden.

Nachstehend wird die Erfindung anhand von Ausführungsbeispielen in Verbindung mit zugehörigen Zeichnungen näher erläutert. Diese zeigen schematisch:
- **Fig. 1**: ein Berechtigungssystem mit einem Authentifikationselement und einer Vorrichtung; und
- **Fig. 2**: ein Verfahren zur Positionskontrolle.

In nachfolgender Beschreibung werden gleiche Bezugszeichen für gleiche Gegenstände verwendet.

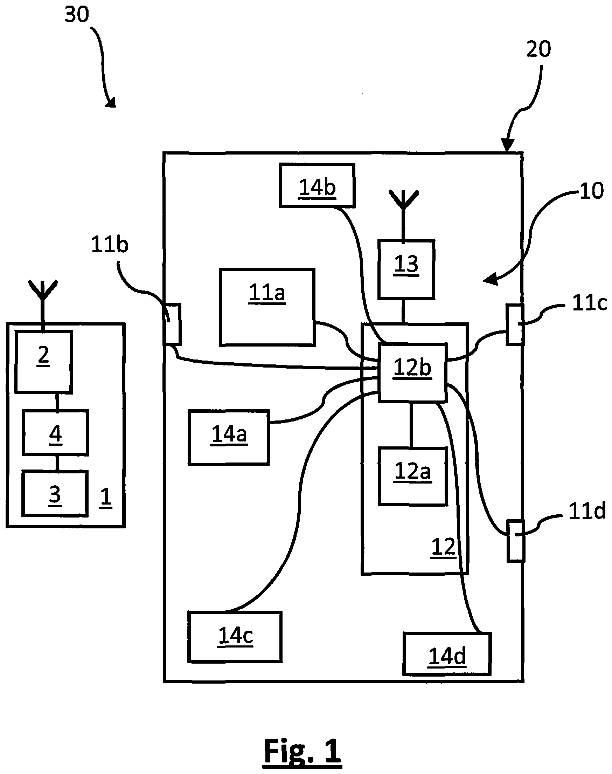

**Fig. 1** zeigt ein Berechtigungssystem 30 für Fahrzeuge, das ein Authentifikationselement 1 und eine Vorrichtung 10 aufweist. Während das Authentifikationselement der Erfassung einer Bewegung, Vibration und/oder Neigung dient, wird mit der Vorrichtung eine Bewegung, Vibration und/oder Neigung erzeugt.

Das Authentifikationselement 1 ist im vorliegenden Beispiel als Schlüssel oder Keyless-Go-Mittel für ein Fahrzeug 20 ausgestaltet und weist eine Funkschnittstelle 2 zum Senden und Empfangen eines Authentifikationssignals und ein Sensorelement 3 zur Erfassung einer Bewegung, Vibration und/oder Neigung auf.

Das Sensorelement 3 des Authentifikationselements 1 weist einen Beschleunigungs-, Drehratensensor und/oder Neigungsmesser auf. Dies erlaubt es Kräfte, Drehraten (Gierrate, Nickrate, Rollrate) sowie eine Steigung zu erfassen, die auf das Authentifikationselement einwirken bzw. denen das Authentifikationselement ausgesetzt ist.

Des Weiteren hat das Authentifikationselement 1 eine Signalverarbeitungs- und - weiterleitungseinrichtung 4. Diese ist sowohl mit den Sensorelement 3 als auch mit der Funkschnittstelle 2 verbunden. Ferner kann mithilfe der Signalverarbeitungs- und -weiterleitungseinrichtung 4 eine von dem Sensorelement 3 erfasste Bewegung, Vibration und/oder Neigung in ein Authentifikationssignal umgewandelt werden.

Auch kann mit der Signalverarbeitungs- und -weiterleitungseinrichtung 4 das Authentifikationssignal bzw. Authentifikationssignale über die Funkschnittstelle 2 an die Funkeinrichtung 13 der Vorrichtung 10 weitergeleitet werden.

Die Vorrichtung 10 ist fahrzeugseitig, im hier vorliegenden Ausführungsbeispiel in einem Fahrzeug 20, angeordnet und weist die Aktoren 11a, 11b, 11c, 11d auf, mit denen eine Bewegung, Vibration und/oder Neigung erzeugbar ist.

Ferner hat die Vorrichtung 10 vier Sensoreinrichtungen 14a, 14b, 14c, 14d zur Erfassung einer Bewegung, Vibration und/oder Neigung. Jede der Sensoreinrichtungen 14a, 14b, 14c, 14d weist einen Beschleunigungs-, Drehratensensor und einen Neigungsmesser auf. Somit ist es auch mit den Sensoreinrichtungen 14a, 14b, 14c, 14d möglich, Kräfte, Drehraten (Gierrate, Nickrate, Rollrate) sowie Steigung bzw. Winkelmessung zu erfassen, wobei diese auf die Vorrichtung einwirken bzw. denen die Vorrichtung ausgesetzt ist.

Selbstverständlich ist es auch denkbar, dass z. B. die Sensoreinrichtung 14a als Beschleunigungssensor ausgebildet ist, während Sensoreinrichtungen 14b und 14c jeweils als Drehratensensor und Sensoreinrichtung 14d als Neigungsmesser ausgebildet ist.

Betreffend das Authentifikationselement 1 und die Vorrichtung 10 erfassen die genannten Beschleunigungssensoren eine lineare Beschleunigung in mindestens eine Raumrichtung, wobei das Sensorelement 3 und die Sensoreinrichtung 14a jeweils drei Beschleunigungssensoren aufweisen, die orthogonal zueinander angeordnet sind.

Ferner weisen das Sensorelement 3 und die Sensoreinrichtungen 14b, 14c, 14d Drehratensensoren sowie Neigungsmesser auf. Hierbei weisen sowohl das Sensorelement 3 als auch alle Sensoreinrichtungen 14a, 14b, 14c, 14d drei Sensoren bzw. Neigungsmesser auf, die orthogonal zueinander angeordnet sind. Die Verwendung von jeweils z. B. drei Beschleunigungssensoren, Drehratensensoren oder Neigungsmesser erlauben es, die Beschleunigung, die Drehrate und die Neigung im dreidimensionalen Raum zu erfassen.

Zusammengefasst können also die Vorrichtung 10 als auch das Authentifikationselement 1 ihre Lage und Bewegung im dreidimensionalen Raum erfassen.

Des Weiteren zeigt Fig. 1, dass die Vorrichtung 10 eine Funkeinrichtung 13 zum Senden und Empfangen eines Authentifikationssignals sowie eine Steuerungseinrichtung 12, insbesondere eine Steuerungselektronik, umfasst.

Die Steuerungseinrichtung 12 weist wiederum eine Funktionslogik 12a zur Verarbeitung von Authentifikationssignalen und eine Signalerzeugungs- und - erfassungseinrichtung 12b zum Erzeugen und Erfassen einer Bewegung, Vibration und/oder Neigung auf.

Ferner ist die Steuerungseinrichtung 12 mit den Aktoren 11a, 11b, 11c, 11d, mit den Sensoreinrichtungen 14a, 14b, 14c, 14d bzw. den einzelnen Sensoren und Messern und mit der Funkeinrichtung 13 verbunden.

Die Aktoren 11a, 11b, 11c, 11d sind an einem Übertragungsmittel 20 bzw. an einem Fahrzeug angeordnet, um ein Authentifikationssignal durch eine Bewegung, Vibration und/oder Neigung zu erzeugen und auf das Fahrzeug zu übertragen, wodurch auch das erzeugte Authentifikationssignal an das Authentifikationselement 1 übertragen werden kann.

Um eine Bewegung, Vibration und/oder Neigung zu erzeugen, steuert die Funktionslogik 12a über die Signalerzeugungs- und -erfassungseinrichtung 12b einen oder mehrere der Aktoren 11a, 11b, 11c, 11d nacheinander oder gleichzeitig an. Dadurch kann ein vorbestimmtes und/oder zufallsbedingtes Authentifikationssignal von der Funktionslogik 12a in Bewegung, Vibration und/oder Neigung umgewandelt und erzeugt werden.

Die Sensoreinrichtungen 14a, 14b, 14c, 14d erfassen fahrzeugseitig die erzeugte Bewegung, Vibration und/oder Neigung. Somit ist es also möglich, dass die mit der Funkeinrichtung 13 verbundene Funktionslogik 12a die von der Funkeinrichtung 13 empfangenen Authentifikationssignale mit den von den Sensoreinrichtungen 14a, 14b, 14c, 14d erfassten Authentifikationssignalen vergleichen kann. Auch ist es denkbar, dass die Authentifikationssignale zusätzlich mit den von der Funktionslogik 12a erzeugten vorbestimmten und/oder zufallsbedingten Authentifikationssignalen verglichen werden.

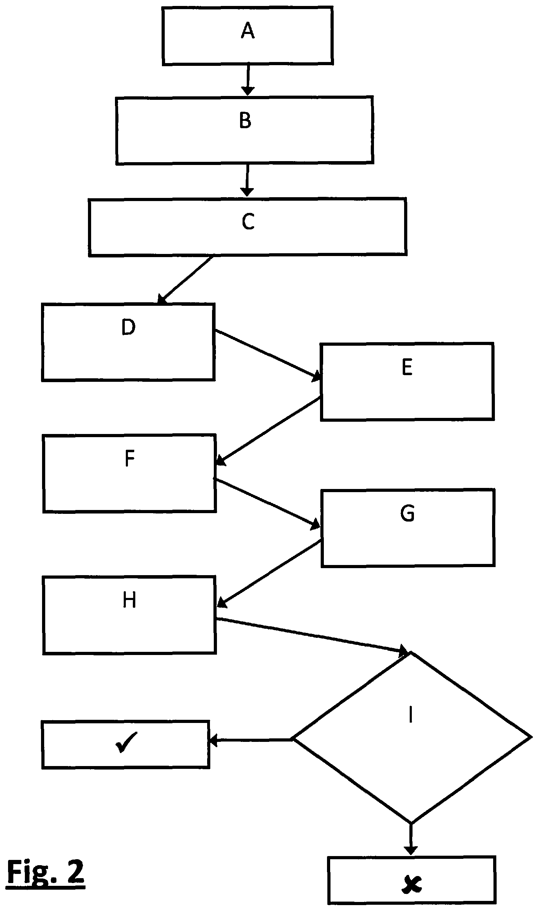

**Fig. 2** stellt ein Verfahren zur Positionskontrolle vor bzw. einen möglichen Verfahrensablauf. Dieses Verfahren baut auf der Beschreibung zu Fig. 1 auf.

Das Verfahren zur Positionskontrolle mit einem Berechtigungssystem 30 umfasst das Authentifikationselement 1 zur Erfassung einer Bewegung, Vibration und/oder Neigung und die Vorrichtung 10 zur Erzeugung einer Bewegung, Vibration und/oder Neigung.

In Schritt A wird durch Aktivieren eines Triggerelements der Vorrichtung 10 das Verbinden der Steuerungseinrichtung 12 mit der Funkschnittstelle 2 initiiert.

Daraufhin wird in Schritt B zwischen der Steuerungseinrichtung 12 der Vorrichtung 10 und der Signalverarbeitungs- und -weiterleitungseinrichtung 4 des Authentifikationselements 1 eine Funkverbindung aufgebaut. Die Funkverbindung wird dabei insbesondere zwischen der Funkschnittstelle 2 des Authentifikationselements 1 und der Funkeinrichtung 13 der Vorrichtung 10 aufgebaut.

Im darauf folgenden Schritt C wird die Zeit zwischen der Funktionslogik 12a der Vorrichtung 10 und der Signalverarbeitungs- und -weiterleitungseinrichtung 4 des Authentifikationselements 1 über die bestehende Funkverbindung synchronisiert.

Danach wird in Schritt D das Sensorelement 3 durch die Signalverarbeitungs- und - weiterleitungseinrichtung 4 des Authentifikationselements 1 aktiviert.

In Schritt E werden Authentifikationssignale in Form einer Bewegung und/oder einer Vibration durch die Vorrichtung 10 erzeugt. Dies geschieht durch Ansteuern eines oder mehrerer Aktoren 11a, 11b, 11c, 11d der Vorrichtung 10.

Dabei werden die Aktoren 11a, 11b, 11c, 11d durch die Signalerzeugungs- und - erfassungseinrichtung 12b der Steuerungseinrichtung 12 gesteuert. Dies geschieht gemäß Anweisung der Funktionslogik 12a, um ein Authentifikationssignal in eine Bewegung und/oder Vibration umzuwandeln bzw. um ein Authentifikationssignal als Bewegung und/oder Vibration wiederzugeben.

Ferner wird das Erzeugen der Authentifikationssignale zu einem definierten Zeitpunkt gestartet, um eine zeitliche Zuordnung der Bewegung und/oder Vibration zu ermöglichen. Außerdem können die Authentifikationssignale moduliert bzw. im zeitlichen Verlauf, der Amplitude und der Frequenz variiert werden, um individuelle Signale zu erzeugen.

Des Weiteren umfasst der Schritt E bzw. das Erzeugen von Authentifikationssignalen auch ein Auslesen der Steigung aus der Sensoreinrichtung 14d der Vorrichtung 10.

In Schritt F werden die erzeugten Authentifikationssignale durch die Signalverarbeitungs- und -weiterleitungseinrichtung 4 des Authentifikationselements 1 mithilfe des Sensorelements 3 erfasst. Das Erfassen geschieht ebenfalls in Abhängigkeit der synchronisierten Zeit und innerhalb eines vorgegebenen Zeitfensters.

Des Weiteren werden von dem Sensorelement 3 Authentifikationssignale durch Auslesen der Steigung bzw. Neigung des Authentifikationselements 1 erfasst.

Schritt G repräsentiert das Übermitteln der erfassten Authentifikationssignale von der Signalverarbeitungs- und -weiterleitungseinrichtung 4 des Authentifikationselements 1 an die Funktionslogik 12a der Vorrichtung 10 über eine Funkverbindung von Funkschnittstelle 2 und Funkeinrichtung 13. Dabei werden die Authentifikationssignale verschlüsselt und komprimiert übermittelt, um eine Manipulation zu erschweren.

In Schritt H werden die erzeugten Authentifikationssignale mit den erfassten Authentifikationssignalen in der Steuerungseinrichtung 12, insbesondere in der Funktionslogik 12a der Vorrichtung 10 verglichen. Dieser Schritt umfasst auch einen Vergleich der Authentifikationssignale in Abhängigkeit der Zeit, um Manipulationen zu erschweren.

Ferner werden die durch die Sensoreinrichtungen 14a, 14b, 14c, 14d erzeugten Authentifikationssignale der Vorrichtung 10 mit den durch das Sensorelement 3 erfassten Authentifikationssignalen des Authentifikationselements 1 in bzw. durch die Funktionslogik 12a verglichen. Dabei stimmen beide Signale überein, wenn die Authentifikationssignale des Authentifikationselements 1 innerhalb eines definierten Toleranzbereichs um die Authentifikationssignale der Vorrichtung 10 liegen.

In Schritt I des Verfahrens wird abgefragt, ob der Vergleich positiv bzw. erfolgreich oder negativ bzw. fehlgeschlagen ist. Denn bei einem positiven Vergleich ist die Position des Authentifikationselements 1 auf den Bewegungs- und/oder Vibrationsbereich der Vorrichtung 10 sowie auf einen Bereich mit im Wesentlichen derselben Neigung bestimmbar, wodurch z. B. die Erlaubnis zum Bewegen eines Fahrzeuges freigeschaltet wird, wobei darüber hinaus die bekannte rein informationstechnische challenge/response Kommunikation zur Authentifizierungsüberprüfung als Berechtigungsbedingung berücksichtigt wird.

Hingegen wird bei einem negativen Vergleich eine akustische und optische Warnung aktiviert bzw. ausgegeben, um Aufmerksamkeit zu erregen.

In einem letzten nicht dargestellten Schritt wird nach dem Vergleichen der Authentifikationssignale die Funkverbindung zwischen der Funkschnittstelle 2 und der Funkeinrichtung 13 getrennt. Ferner wird das Sensorelement 3 des Authentifikationselements 1 durch die Signalverarbeitungs- und -weiterleitungseinrichtung 4 deaktiviert, um Energie zu sparen.

Mit anderen Worten kann das erfindungsgemäße Verfahren auch auf nachstehende Art wiedergegeben bzw. kurz zusammengefasst werden.

Es soll vorzugsweise sichergestellt werden, dass sich ein portables elektronisches Authentifikationselement 1, wie ein Mobiltelefon oder ein Keyless-Entry-Schlüssel, in einem Fahrzeuginneren befindet. Dies kann z. B. bei einem Motorstart notwendig sein.

Das Authentifikationselement 1 ist günstigerweise ein Keyless-Entry-Schlüssel eines Fahrzeuges 20 oder ein Mobiltelefon eines Nutzers, in welchem bestimmte Funktionen eines Keyless-Entry-Schlüssel integriert sind.

Der Nutzer wünscht sein Fahrzeug 20 starten. Hierfür drückt er beispielsweise den Start/Stopp Knopf im Fahrzeug. Ausgelöst durch diesen Trigger sorgt vorzugsweise eine Funktionslogik 12a einer am Fahrzeug 20 angeordneten Vorrichtung 10 nun dafür, dass eine Funkverbindung bzw. -kommunikation zwischen dem Keyless-Entry-Schlüssel bzw. dem Authentifikationselement 1, das der Nutzer zu Authentifizierungszwecken bei sich führt, und einer fahrzeugseitigen Funkeinrichtung 13 aufgebaut wird oder - falls diese zu diesem Zeitpunkt bereits besteht - vorzugsweise gehalten wird.

Vorzugsweise erfolgt eine challenge/response Kommunikation zwischen dem Authentifikationselement 1 und dem Fahrzeug 20 bzw. der Funktionslogik 12a der Vorrichtung 10- als erste Stufe eines Authentifizierungsprozesses.

Über die Funkverbindung erfolgt vorzugsweise ferner eine zeitliche Synchronisierung zwischen Fahrzeug 20 bzw. Funktionslogik 12a und Authentifikationselement 1. Dies ist wegen der Korrelation der Bewegungen des Fahrzeugs und der vom Authentifikationselement 1 gemessenen eigenen Bewegungen wichtig.

Auf diesem Wege wird beim Authentifikationselement 1 nun auch die Benutzung bzw. Aktivierung eines Sensorelements 3 initiiert. Das Sensorelement 3 darf vorzugsweise aus Ruhestromgründen nämlich nicht permanent aktiv sein.

Nachdem beide Seiten synchronisiert sind, sorgt die Funktionslogik 12a im Fahrzeug 20 dafür, dass eine Signalerzeugungs- und -erfassungseinrichtung 12b einen oder mehrere bewegungserzeugende Aktoren 11a, 11b, 11c, 11d ansteuert.

Dies kann z.B. der Motorstart sein oder gegebenenfalls - zumindest wenn der herkömmliche Authentifizierungsprozess erfolgreich abgeschlossen wurde - eine Fahrbewegung des Fahrzeuges gemäß Nutzerwunsch.

Der Zeitpunkt, an dem Authentifikationssignale erzeugt werden, wird von der Funktionslogik 12a vorzugsweise präzise gesteuert. Dadurch kann sichergestellt werden, dass es definierte und bekannte Zeitversätze für die Authentifikationssignale gibt, wobei es um eine zeitliche Zuordnung der erzeugten und erfassten Bewegung und/oder Vibration geht.

Das Authentifikationselement 1 bzw. dessen Sensorelement 3 misst nun vorzugsweise während dieser erweiterten Authentifizierungsphase die eingehenden Authentifikationssignale und übermittelt diese vorzugsweise in Verbindung mit der Information ihres zeitlichen Eintreffens in digitalisierter und verschlüsselter und vorzugsweise komprimierter Form über die Funkschnittstelle 2 an die Funktionslogik 12a.

Ergänzend kann im Fahrzeug 20 auch eine Sensoreinrichtung 14a, 14b, 14c, 14d während dieser Zeit die Authentifikationssignale aufnehmen und über übliche fahrzeuginterne Schnittstellen an die Funktionslogik 12a weiterreichen.

In der Funktionslogik 12a werden nun vorzugsweise (dies kann nach oder während des Messvorgangs erfolgen) die Authentifikationssignale gegeneinander plausibilisiert, wobei ein Mindestmaß an Korrelation vorliegen muss.

Das an den bewegungserzeugenden Aktoren 11a, 11b, 11c, 11d erzeugte Authentifikationssignale ist vorzugsweise von der fahrzeugseitigen Vorrichtung 10 selbst erzeugt worden und damit günstigerweise vollständig bekannt und das am Authentifikationselement 1 erfasste Authentifikationssignal wurde idealerweise auf einem sicheren (verkrypteten) Kanal an die fahrzeugseitige Vorrichtung 10 übermittelt.

Die Informationen der im Fahrzeug 20 verbauten Sensoreinrichtung 14a, 14b, 14c, 14d können vorzugsweise unterstützend als Referenz herangezogen werden, was die Signalauswertung insgesamt robuster macht.

Wenn die Bewegung des Fahrzeugs 20 und die im Authentifikationselement 1 erfasste Bewegung korrelieren, dann wird vorzugsweise der Authentifizierungsprozess auch in zweiter Instanz erfolgreich beendet und eine Fahrberechtigung liegt vor.

Gegebenenfalls kann der Authentifizierungsprozess wiederkehrend gestalten werden, wodurch das Berechtigungssystem noch sicherer gemacht werden kann.

### Bezugszeichenliste

- 1: Authentifikationselement
- 2: Funkschnittstelle
- 3: Sensorelement
- 4: Signalverarbeitungs- und -weiterleitungseinrichtung

- 10: Vorrichtung
- 11a-d: Aktor
- 12: Steuerungseinrichtung
- 12a: Funktionslogik
- 12b: Signalerzeugungs- und -erfassungseinrichtung
- 13: Funkeinrichtung
- 14a-d: Sensoreinrichtung
- 20: Übertragungsmittel

## Patentansprüche

1. Berechtigungssystem (30) für Fahrzeuge, das mindestens ein Authentifikationselement (1) zur Erfassung einer Bewegung, Vibration und/oder Neigung und eine Vorrichtung (10) zur Erzeugung einer Bewegung, Vibration und/oder Neigung aufweist,
- wobei das Authentifikationselement (1), insbesondere ein Schlüssel oder ein Keyless-Go-Mittel für ein Fahrzeug (20), beispielsweise ein Automobil, folgendes aufweist:
• eine Funkschnittstelle (2) zum Senden und Empfangen eines Authentifikationssignals, und
• ein Sensorelement (3) zur Erfassung einer Bewegung, Vibration und/oder Neigung,
- wobei die Vorrichtung (10) fahrzeugseitig, insbesondere in oder an einem Automobil, angeordnet ist, und
- wobei die Vorrichtung (10) folgendes aufweist:
• mindestens einen Aktor (11a, 11b, 11c, 11d) zur Erzeugung einer Bewegung, Vibration und/oder Neigung, und
• eine Funkeinrichtung (13) zum Senden und Empfangen eines Authentifikationssignals,
• wobei der mindestens eine Aktor (11a, 11b, 11c, 11d) an einem Übertragungsmittel (20), insbesondere an einem Fahrzeug, angeordnet ist, um ein Authentifikationssignal durch Bewegung, Vibration und/oder Neigung zu erzeugen und an das Authentifikationselement (1) zu übertragen.

2. Berechtigungssystem nach Anspruch 1, wobei das Sensorelement (3) des Authentifikationselements (1) zur Erfassung einer Bewegung, Vibration und/oder Neigung mindestens einen Beschleunigungssensor und/oder mindestens einen Drehratensensor und/oder mindestens einen Neigungsmesser aufweist.

3. Berechtigungssystem nach Anspruch 2, wobei der mindestens eine Beschleunigungssensor eine lineare Beschleunigung in mindestens eine Raumrichtung erfasst, wobei vorzugsweise das Sensorelement (3) drei Beschleunigungssensoren aufweist, die orthogonal zueinander angeordnet sind, wobei vorzugsweise der mindestens eine Drehratensensor eine Winkelgeschwindigkeit um mindestens eine Raumrichtung erfasst, wobei vorzugsweise das Sensorelement (3) drei Drehratensensoren aufweist, die orthogonal zueinander angeordnet sind, wobei vorzugsweise der mindestens eine Neigungsmesser eine Steigung oder einen Winkel in mindestens eine Raumrichtung erfasst, und wobei vorzugsweise das Sensorelement (3) drei Neigungsmesser aufweist, die orthogonal zueinander angeordnet sind.

4. Berechtigungssystem nach einem der Ansprüche 1 bis 3,
wobei die Vorrichtung (10) eine Sensoreinrichtung (14a, 14b, 14c, 14d) zur Erfassung einer Bewegung, Vibration und/oder Neigung aufweist.

5. Berechtigungssystem nach Anspruch 4, wobei die Sensoreinrichtung (14a, 14b, 14c, 14d) mindestens einen Beschleunigungssensor und/oder mindestens einen Drehratensensor und/oder mindestens einen Neigungsmesser aufweist, wobei vorzugsweise der mindestens eine Beschleunigungssensor eine lineare Beschleunigung in mindestens eine Raumrichtung erfasst, wobei vorzugsweise die Sensoreinrichtung (14a, 14b, 14c, 14d) drei Beschleunigungssensoren aufweist, die orthogonal zueinander angeordnet sind, wobei vorzugsweise der mindestens eine Drehratensensor eine Winkelgeschwindigkeit um mindestens eine Raumrichtung erfasst, wobei vorzugsweise die Sensoreinrichtung (14a, 14b, 14c, 14d) drei Drehratensensoren aufweist, die orthogonal zueinander angeordnet sind, wobei vorzugsweise der mindestens eine Neigungsmesser eine Steigung oder einen Winkel in mindestens eine Raumrichtung erfasst, und wobei vorzugsweise die Sensoreinrichtung (14a, 14b, 14c, 14d) drei Neigungsmesser aufweist, die orthogonal zueinander angeordnet sind.

6. Berechtigungssystem nach einem der Ansprüche 1 bis 5,
wobei die Vorrichtung (10) ferner eine Steuerungseinrichtung (12), insbesondere eine Steuerungselektronik aufweist, die vorzugsweise mit dem mindestens einen Aktor (11a, 11b, 11c, 11d), mit der Sensoreinrichtung (14a, 14b, 14c, 14d) und/oder mit der Funkeinrichtung (13) verbunden ist, wobei vorzugsweise die Steuerungseinrichtung (12) eine Funktionslogik (12a) zur Verarbeitung von Authentifikationssignalen und eine Signalerzeugungs- und -erfassungseinrichtung (12b) zum Erzeugen und Erfassen einer Bewegung, Vibration und/oder Neigung aufweist, wobei vorzugsweise die Steuerungseinrichtung (12), insbesondere die Signalerzeugungs- und -erfassungseinrichtung (12b), den mindestens einen Aktor (11a, 11b, 11c, 11d) ansteuert, um eine Bewegung, Vibration und/oder Neigung zu erzeugen,
wobei vorzugsweise die Sensoreinrichtung (14a, 14b, 14c, 14d) die erzeugte Bewegung, Vibration und/oder Neigung erfasst,
wobei vorzugsweise die Funktionslogik (12a) über die Signalerzeugungs- und -erfassungseinrichtung (12b) den mindestens einen Aktor (11a, 11b, 11c, 11d) ansteuert, um ein vorbestimmtes und/oder zufallsbedingtes Authentifikationssignal in Bewegung, Vibration und/oder Neigung umzuwandeln und zu erzeugen.

7. Berechtigungssystem nach einem der Ansprüche 1 bis 6, wobei das Authentifikationselement (1) ferner eine Signalverarbeitungs- und - weiterleitungseinrichtung (4) aufweist, die vorzugsweise eine von dem Sensorelement (3) erfasste Bewegung, Vibration und/oder Neigung in ein Authentifikationssignal umwandelt und vorzugsweise das Authentifikationssignal über die Funkschnittstelle (2) an die Funkeinrichtung (13) der Vorrichtung (10) weiterleitet, wobei vorzugsweise die mit der Funkeinrichtung (13) verbundene Steuerungseinrichtung (12), insbesondere die Funktionslogik (12a), das von der Funkeinrichtung (13) empfangene Authentifikationssignal in der Funktionslogik (12a) mit dem von der Sensoreinrichtung (14a, 14b, 14c, 14d) erfassten Authentifikationssignal und/oder mit dem von der Funktionslogik (12a) erzeugten vorbestimmten und/oder zufallsbedingten Authentifikationssignal vergleicht.

8. Verfahren zur Positionskontrolle mit einem Berechtigungssystem (30) nach einem der Ansprüche 1 bis 7, wobei das Berechtigungssystem (30) mindestens ein Authentifikationselement (1) zur Erfassung einer Bewegung, Vibration und/oder Neigung und eine Vorrichtung (10) zur Erzeugung einer Bewegung, Vibration und/oder Neigung umfasst, und wobei das Verfahren nachfolgende Schritte aufweist:
- Erzeugen von Authentifikationssignalen in Form einer Bewegung und/oder einer Vibration durch die Vorrichtung (10),
- wobei das Erzeugen von Authentifikationssignalen in Form einer Bewegung und/oder einer Vibration, ein Ansteuern des mindestens einen Aktors (11a, 11b, 11c, 11d) der Vorrichtung (10) umfasst, um Bewegung und/oder Vibration zu erzeugen,
- Erfassen der Authentifikationssignale durch das Authentifikationselement (1),
- Übermitteln der erfassten Authentifikationssignale von dem Authentifikationselement (1) an die Vorrichtung (10),
- Vergleichen der erzeugten Authentifikationssignale mit den erfassten Authentifikationssignalen in der Vorrichtung (10),
- wobei bei einem positiven Vergleich die Position des Authentifikationselements (1) auf den Bewegungs- und/oder Vibrationsbereich der Vorrichtung (10) bestimmbar ist,
- wobei bei einem negativen Vergleich die Position des Authentifikationselements (1) unbekannt ist.

9. Verfahren nach Anspruch 8,
- wobei das Erfassen der Authentifikationssignale ein Erfassen durch die Signalverarbeitungs- und -weiterleitungseinrichtung (4) des Authentifikationselements (1) mithilfe des Sensorelements (3) umfasst,
- wobei vorzugsweise das Übermitteln der erfassten Authentifikationssignale das Übermitteln von der Signalverarbeitungs- und -weiterleitungseinrichtung (4) an die Steuerungseinrichtung (12), insbesondere an die Funktionslogik (12a), über eine Funkverbindung von Funkschnittstelle (2) und Funkeinrichtung (13) umfasst,
- wobei vorzugsweise das Vergleichen der erzeugten Authentifikationssignale mit den erfassten Authentifikationssignalen das Vergleichen der Signale in der Steuerungseinrichtung (12), insbesondere in der Funktionslogik (12a), umfasst.

10. Verfahren nach Anspruch 8 oder 9, wobei das Verfahren nachfolgende weitere Schritte umfasst, die vor dem Erzeugen von Authentifikationssignalen ausgeführt werden:
- Verbinden der Vorrichtung (10) mit dem Authentifikationselement (1) durch Aufbauen einer Funkverbindung,
- vorzugsweise Synchronisieren der Zeit zwischen Authentifikationselement (1) und Vorrichtung (10) über die bestehende Funkverbindung, und
- Aktivieren des Sensorelements (3) des Authentifikationselements (1).

11. Verfahren nach Anspruch 10,
- wobei das Verbinden der Vorrichtung (10) mit dem Authentifikationselement (1) ein Verbinden der Steuerungseinrichtung (12) der Vorrichtung (10) mit der Signalverarbeitungs- und - weiterleitungseinrichtung (4) des Authentifikationselements (1) durch Aufbauen einer Funkverbindung zwischen der Funkschnittstelle (2) des Authentifikationselements (1) und der Funkeinrichtung (13) der Vorrichtung (10) umfasst,
- wobei vorzugsweise das Verbinden der Steuerungseinrichtung (12) mit der Funkschnittstelle (2) durch Aktivieren eines Triggerelements der Vorrichtung (10) initiiert wird,
- wobei vorzugsweise das Synchronisieren der Zeit zwischen Authentifikationselement (1) und Vorrichtung (10) ein Synchronisieren der Zeit zwischen Funktionslogik (12a) der Vorrichtung (10) und der Signalverarbeitungs- und -weiterleitungseinrichtung (4) des Authentifikationselements (1) über die bestehende Funkverbindung umfasst, und
- wobei vorzugsweise das Aktivieren des Sensorelements (3) des Authentifikationselements (1) ein Aktivieren des Sensorelements (3) durch die Signalverarbeitungs- und -weiterleitungseinrichtung (4) umfasst.

12. Verfahren nach einem der Ansprüche 8 bis 11,
- wobei beim Erzeugen von Authentifikationssignalen der mindestens eine Aktor (11a, 11b, 11c, 11d) durch die Steuerungseinrichtung (12) gesteuert wird, wobei vorzugsweise die Signalerzeugungs- und - erfassungseinrichtung (12b) gemäß Anweisung der Funktionslogik (12a) den mindestens einen Aktor (11a, 11b, 11c, 11d) ansteuert, um ein Authentifikationssignal in eine Bewegung und/oder Vibration umzuwandeln,
- wobei vorzugsweise beim Erzeugen der Authentifikationssignalen der mindestens eine Aktor (11a, 11b, 11c, 11d) zu einem definierten Zeitpunkt gestartet wird,
- wobei vorzugsweise beim Erfassen der Authentifikationssignalen die Signalverarbeitungs- und -weiterleitungseinrichtung (4) die von dem Sensorelement (3) erfassten Authentifikationssignale in Abhängigkeit der synchronisierten Zeit erfasst,
- wobei vorzugsweise das Erfassen von Authentifikationssignalen innerhalb eines vorgegebenen Zeitfensters erfolgt, und
- wobei vorzugsweise der Schritt des Vergleichens auch einen Vergleich der Authentifikationssignale in Abhängigkeit der Zeit umfasst.

13. Verfahren nach einem der Ansprüche 8 bis 12, wobei nachfolgende Schritte zusätzlich zu den Schritten Erzeugen und Erfassen der/von Authentifikationssignalen ausgeführt werden:
- Erzeugen von Authentifikationssignalen durch Auslesen der Steigung oder des Winkels aus der Sensoreinrichtung (14a, 14b, 14c, 14d) der Vorrichtung (10),
- vorzugsweise Erfassen von Authentifikationssignalen durch Auslesen der Steigung oder des Winkels aus dem Sensorelement (3) des Authentifikationselements (1).

14. Verfahren nach einem der Ansprüche 8 bis 13, wobei nachfolgende Schritte zusätzlich zum Schritt des Vergleichens der Authentifikationssignalen ausgeführt werden:
- Vergleichen der durch die Sensoreinrichtung (14a, 14b, 14c, 14d) erzeugten Authentifikationssignale der Vorrichtung (10) mit den durch das Sensorelement (3) erfassten Authentifikationssignalen des Authentifikationselements (1), vorzugsweise in der Steuerungseinrichtung (12), insbesondere in der Funktionslogik (12a),
- wobei bei einem positiven Vergleich die Position des Authentifikationselements (1) auf einen Bereich mit im Wesentlichen derselben Neigung bestimmbar ist,
- wobei vorzugsweise bei einem positiven Vergleich eine Funktion, insbesondere die Erlaubnis zum Bewegen eines Fahrzeuges, freigeschaltet wird,
- wobei bei einem negativen Vergleich die Position des Authentifikationselements unbekannt ist, und
- wobei vorzugsweise bei einem negativen Vergleich eine Sicherheitsfunktion, insbesondere eine akustische und/oder optische Warnung, aktiviert wird.

15. Verfahren nach einem der Ansprüche 8 bis 14, **dadurch gekennzeichnet, dass**
- der Schritt des Erzeugens von Authentifikationssignalen durch Aktivieren des mindestens einen Aktors (11a, 11b, 11c, 11d) eine bestimmbare Variation der durch den mindestens einen Aktor (11a, 11b, 11c, 11d) erzeugten Bewegung in der Zeit, der Amplitude und/oder der Frequenz umfasst,
- vorzugsweise der Schritt des Übermittelns der Authentifikationssignale eine Verschlüsselung und/oder Komprimierung der Authentifikationssignale umfasst,
- vorzugsweise beim Vergleichen der Authentifikationssignale des Authentifikationselements (1) mit den Authentifikationssignalen der Vorrichtung (10) beide Signaldaten übereinstimmen, wenn die Authentifikationssignale des Authentifikationselements (1) innerhalb eines definierbaren Toleranzbereichs um die Authentifikationssignale der Vorrichtung (10) liegen,
vorzugsweise nach Vergleichen der Authentifikationssignale die Funkverbindung zwischen der Funkschnittstelle (2) und der Funkeinrichtung (13) getrennt wird, wobei vorzugsweise ferner das Sensorelement (3) des Authentifikationselements (1) durch die Signalverarbeitungs- und - weiterleitungseinrichtung (4) deaktiviert wird.

## Claims

1. Authorization system (30) for vehicles, which has at least one authentication element (1) for capturing a movement, vibration and/or inclination and an apparatus (10) for producing a movement, vibration and/or inclination,
- wherein the authentication element (1), in particular a key or a Keyless-Go means for a vehicle (20), for example an automobile, has the following:
• a radio interface (2) for transmitting and receiving an authentication signal, and
• a sensor element (3) for capturing a movement, vibration and/or inclination,
- wherein the apparatus (10) is arranged on the vehicle side, in particular in or on an automobile, and
- wherein the apparatus (10) has the following:
• at least one actuator (11a, 11b, 11c, 11d) for producing a movement, vibration and/or inclination, and
• a radio device (13) for transmitting and receiving an authentication signal,
• wherein the at least one actuator (11a, 11b, 11c, 11d) is arranged on a transmission means (20), in particular on a vehicle, in order to produce an authentication signal by a movement, vibration and/or inclination and to transmit it to the authentication element (1).

2. Authorization system according to claim 1, wherein the sensor element (3) of the authentication element (1) for capturing a movement, vibration and/or inclination has at least one acceleration sensor and/or at least one rate-of-rotation sensor and/or at least one inclinometer.

3. Authorization system according to claim 2, wherein the at least one acceleration sensor captures a linear acceleration in at least one spatial direction, wherein the sensor element (3) preferably has three acceleration sensors which are arranged orthogonally to one another, wherein the at least one rate-of-rotation sensor preferably captures an angular velocity around at least one spatial direction, wherein the sensor element (3) preferably has three rate-of-rotation sensors which are arranged orthogonally to one another, wherein the at least one inclinometer preferably captures a gradient or an angle in at least one spatial direction, and wherein the sensor element (3) preferably has three inclinometers which are arranged orthogonally to one another.

4. Authorization system according to one of claims 1 to 3,
wherein the apparatus (10) has a sensor device (14a, 14b, 14c, 14d) for capturing a movement, vibration and/or inclination.

5. Authorization system according to claim 4, wherein the sensor device (14a, 14b, 14c, 14d) has at least one acceleration sensor and/or at least one rate-of-rotation sensor and/or at least one inclinometer, wherein the at least one acceleration sensor preferably captures a linear acceleration in at least one spatial direction, wherein the sensor device (14a, 14b, 14c, 14d) preferably has three acceleration sensors which are arranged orthogonally to one another, wherein the at least one rate-of-rotation sensor preferably captures an angular velocity around at least one spatial direction, wherein the sensor device (14a, 14b, 14c, 14d) preferably has three rate-of-rotation sensors which are arranged orthogonally to one another, wherein the at least one inclinometer preferably captures a gradient or an angle in at least one spatial direction, and wherein the sensor device (14a, 14b, 14c, 14d) preferably has three inclinometers which are arranged orthogonally to one another.

6. Authorization system according to one of claims 1 to 5,
wherein the apparatus (10) also has a control device (12), in particular control electronics, which is preferably connected to the at least one actuator (11a, 11b, 11c, 11d), to the sensor device (14a, 14b, 14c, 14d) and/or to the radio device (13),
wherein the control device (12) preferably has a functional logic unit (12a) for processing authentication signals and a signal production and capture device (12b) for producing and capturing a movement, vibration and/or inclination, wherein the control device (12), in particular the signal production and capture device (12b), preferably controls the at least one actuator (11a, 11b, 11c, 11d) to produce a movement, vibration and/or inclination,
wherein the sensor device (14a, 14b, 14c, 14d) preferably captures the produced movement, vibration and/or inclination,
wherein the functional logic unit (12a) preferably controls the at least one actuator (11a, 11b, 11c, 11d) via the signal production and capture device (12b) to convert a predetermined and/or random authentication signal into a movement, vibration and/or inclination and to produce it.

7. Authorization system according to one of claims 1 to 6, wherein the authentication element (1) also has a signal processing and forwarding device (4) which preferably converts a movement, vibration and/or inclination captured by the sensor element (3) into an authentication signal and preferably forwards the authentication signal to the radio device (13) of the apparatus (10) via the radio interface (2), wherein the control device (12), in particular the functional logic unit (12a), connected to the radio device (13) preferably compares the authentication signal received by the radio device (13) in the functional logic unit (12a) with the authentication signal captured by the sensor device (14a, 14b, 14c, 14d) and/or with the predetermined and/or random authentication signal produced by the functional logic unit (12a).

8. Position control method using an authorization system (30) according to one of claims 1 to 7, wherein the authorization system (30) comprises at least one authentication element (1) for capturing a movement, vibration and/or inclination and an apparatus (10) for producing a movement, vibration and/or inclination, and wherein the method has the following steps of:
- producing authentication signals in the form of a movement and/or a vibration by means of the apparatus (10),
- wherein the production of authentication signals in the form of a movement and/or a vibration comprises controlling the at least one actuator (11a, 11b, 11c, 11d) of the apparatus (10) to produce a movement and/or vibration,
- capturing the authentication signals by means of the authentication element (1),
- transmitting the captured authentication signals from the authentication element (1) to the apparatus (10),
- comparing the produced authentication signals with the captured authentication signals in the apparatus (10),
- wherein the position of the authentication element (1) in the movement and/or vibration range of the apparatus (10) can be determined in the event of a positive comparison,
- wherein the position of the authentication element (1) is unknown in the event of a negative comparison.

9. Method according to claim 8,
- wherein the capture of the authentication signals comprises capture by means of the signal processing and forwarding device (4) of the authentication element (1) with the aid of the sensor element (3),
- wherein the transmission of the captured authentication signals preferably comprises transmission from the signal processing and forwarding device (4) to the control device (12), in particular to the functional logic unit (12a), via a radio connection of the radio interface (2) and the radio device (13),
- wherein the comparison of the produced authentication signals with the captured authentication signals preferably comprises comparing the signals in the control device (12), in particular in the functional logic unit (12a).

10. Method according to claim 8 or 9, wherein the method comprises the following further steps which are carried out before producing authentication signals:
- connecting the apparatus (10) to the authentication element (1) by setting up a radio connection,
- preferably synchronizing the time between the authentication element (1) and the apparatus (10) via the existing radio connection, and
- activating the sensor element (3) of the authentication element (1).

11. Method according to claim 10,
- wherein the connection of the apparatus (10) to the authentication element (1) comprises connecting the control device (12) of the apparatus (10) to the signal processing and forwarding device (4) of the authentication element (1) by setting up a radio connection between the radio interface (2) of the authentication element (1) and the radio device (13) of the apparatus (10),
- wherein the connection of the control device (12) to the radio interface (2) is preferably initiated by activating a trigger element of the apparatus (10),
- wherein the synchronization of the time between the authentication element (1) and the apparatus (10) preferably comprises synchronizing the time between the functional logic unit (12a) of the apparatus (10) and the signal processing and forwarding device (4) of the authentication element (1) via the existing radio connection, and
- wherein the activation of the sensor element (3) of the authentication element (1) preferably comprises activating the sensor element (3) by means of the signal processing and forwarding device (4).

12. Method according to one of claims 8 to 11,
- wherein the at least one actuator (11a, 11b, 11c, 11d) is controlled by the control device (12) when producing authentication signals, wherein the signal production and capture device (12b) preferably controls the at least one actuator (11a, 11b, 11c, 11d), according to an instruction from the functional logic unit (12a), to convert an authentication signal into a movement and/or vibration,
- wherein the at least one actuator (11a, 11b, 11c, 11d) is preferably started at a defined time when producing the authentication signals,
- wherein, when capturing the authentication signals, the signal processing and forwarding device (4) preferably captures the authentication signals captured by the sensor element (3) on the basis of the synchronized time,
- wherein authentication signals are preferably captured within a predefined time window, and
- wherein the comparison step also preferably comprises a comparison of the authentication signals on the basis of the time.

13. Method according to one of claims 8 to 12, wherein the following steps are carried out in addition to the steps of producing and capturing (the) authentication signals:
- producing authentication signals by reading the gradient or the angle from the sensor device (14a, 14b, 14c, 14d) of the apparatus (10),
- preferably capturing authentication signals by reading the gradient or the angle from the sensor element (3) of the authentication element (1).

14. Method according to one of claims 8 to 13, wherein the following steps are carried out in addition to the step of comparing the authentication signals:
- comparing the authentication signals from the apparatus (10) which are produced by the sensor device (14a, 14b, 14c, 14d) with the authentication signals from the authentication element (1) which are captured by the sensor element (3), preferably in the control device (12), in particular in the functional logic unit (12a),
- wherein the position of the authentication element (1) can be determined in a region with substantially the same inclination in the event of a positive comparison,
- wherein a function, in particular the permission to move a vehicle, is preferably enabled in the event of a positive comparison,
- wherein the position of the authentication element is unknown in the event of a negative comparison, and
- wherein a security function, in particular an acoustic and/or optical warning, is preferably activated in the event of a negative comparison.

15. Method according to one of claims 8 to 14, **characterized in that**
- the step of producing authentication signals by activating the at least one actuator (11a, 11b, 11c, 11d) comprises a determinable variation of the movement produced by the at least one actuator (11a, 11b, 11c, 11d) in terms of the time, of the amplitude and/or of the frequency,
- the step of transmitting the authentication signals preferably comprises encryption and/or compression of the authentication signals,
- when comparing the authentication signals from the authentication element (1) with the authentication signals from the apparatus (10), both signal data preferably correspond if the authentication signals from the authentication element (1) are within a definable tolerance range around the authentication signals from the apparatus (10),
the radio connection between the radio interface (2) and the radio device (13) is preferably disconnected after comparing the authentication signals, wherein the sensor element (3) of the authentication element (1) is also preferably deactivated by the signal processing and forwarding device (4).

## Revendications

1. Système d'autorisation (30) destiné à des véhicules et présentant au moins un élément d'authentification (1) servant à détecter un mouvement, une vibration et/ou une inclinaison et un dispositif (10) servant à générer un mouvement, une vibration et/ou une inclinaison,
- dans lequel l'élément d'authentification (1), en particulier une clé ou un moyen de démarrage sans clé destiné à un véhicule (20), par exemple une automobile, comporte :
• une interface radio (2) servant à émettre et à recevoir un signal d'authentification, et
• un élément de détection (3) servant à détecter un mouvement, une vibration et/ou une inclinaison,
- dans lequel le dispositif (10) est agencé côté véhicule, en particulier dans ou sur une automobile, et
- dans lequel le dispositif (10) comporte :
• au moins un actionneur (11a, 11b, 11c, 11d) servant à générer un mouvement, une vibration et/ou une inclinaison, et
• un dispositif radio (13) servant à émettre et à recevoir un signal d'authentification,
• dans lequel ledit au moins un actionneur (11a, 11b, 11c, 11d) est agencé sur un moyen de transmission (20), en particulier sur un véhicule, pour générer, par un mouvement, une vibration et/ou une inclinaison, un signal d'authentification et le transmettre à l'élément d'authentification (1).

2. Système d'autorisation selon la revendication 1, dans lequel l'élément de détection (3) de l'élément d'autorisation (1) servant à détecter un mouvement, une vibration et/ou une inclinaison comporte au moins un capteur d'accélération et/ou au moins un capteur de vitesse de rotation et/ou au moins un inclinomètre.

3. Système d'autorisation selon la revendication 2, dans lequel ledit au moins un capteur d'accélération détecte une accélération linéaire dans au moins une direction spatiale, dans lequel l'élément de détection (3) comporte de préférence trois capteurs d'accélération qui sont disposés perpendiculairement les uns aux autres, dans lequel ledit au moins un capteur de vitesse de rotation détecte de préférence une vitesse angulaire autour d'au moins une direction spatiale, dans lequel l'élément de détection (3) comporte de préférence trois capteurs de vitesse de rotation qui sont agencés perpendiculairement les uns aux autres, dans lequel ledit au moins un inclinomètre détecte de préférence une pente ou un angle dans au moins une direction spatiale, et dans lequel l'élément de détection (3) comporte de préférence trois inclinomètres qui sont agencés perpendiculairement les uns aux autres.

4. Système d'autorisation selon l'une des revendications 1 à 3, dans lequel le dispositif (10) comprend un dispositif de détection (14a, 14b, 14c, 14d) servant à détecter un mouvement, une vibration et/ou une inclinaison.

5. Système d'autorisation selon la revendication 4, dans lequel le dispositif de détection (14a, 14b, 14c, 14d) comporte au moins un capteur d'accélération et/ou au moins un capteur de vitesse de rotation et/ou au moins un inclinomètre, dans lequel ledit au moins un capteur d'accélération détecte de préférence une accélération linéaire dans au moins une direction spatiale, dans lequel le dispositif de détection (14a, 14b, 14c, 14d) comporte de préférence trois capteurs d'accélération qui sont agencés perpendiculairement les uns aux autres, dans lequel ledit au moins un capteur de vitesse de rotation détecte de préférence une vitesse angulaire autour d'au moins une direction spatiale, dans lequel le dispositif de détection (14a, 14b, 14c, 14d) comporte de préférence trois capteurs de vitesse de rotation qui sont agencés perpendiculairement les uns aux autres, dans lequel ledit au moins un inclinomètre détecte de préférence une pente ou un angle dans au moins une direction spatiale, et dans lequel le dispositif de détection (14a, 14b, 14c, 14d) comporte de préférence trois inclinomètres qui sont agencés perpendiculairement les uns aux autres.

6. Système d'autorisation selon l'une des revendications 1 à 5, dans lequel le dispositif (10) comporte en outre un dispositif de commande (12), en particulier une électronique de commande, qui est de préférence relié audit au moins un actionneur (11a, 11b, 11c, 11d), au dispositif de détection (14a, 14b, 14c, 14d) et/ou au dispositif radio (13), dans lequel le dispositif de commande (12) comporte de préférence une logique fonctionnelle (12a) servant à traiter des signaux d'authentification et un dispositif de génération et de détection de signaux (12b) servant à générer et à détecter un mouvement, une vibration et/ou une inclinaison,
dans lequel le dispositif de commande (12), en particulier le dispositif de génération et de détection de signaux (12b), commande de préférence ledit au moins un actionneur (11a, 11b, 11c, 11d) afin de générer un mouvement, une vibration et/ou une inclinaison,
dans lequel le dispositif de détection (14a, 14b, 14c, 14d) détecte de préférence le mouvement, la vibration et/ou l'inclinaison générés,
dans lequel la logique fonctionnelle (12a) commande de préférence ledit au moins un actionneur (11a, 11b, 11c, 11d) par l'intermédiaire du dispositif de génération et de détection de signaux (12b) afin de convertir et de générer un signal d'authentification prédéterminé et/ou aléatoire en un mouvement, une vibration et/ou une inclinaison.

7. Système d'autorisation selon l'une des revendications 1 à 6, dans lequel l'élément d'authentification (1) comprend en outre un dispositif de traitement et de transmission de signaux (4) qui convertit de préférence un mouvement, une vibration et/ou une inclinaison détectés par l'élément de détection (3) en un signal d'authentification et transmet de préférence le signal d'authentification par l'intermédiaire de l'interface radio (2) au dispositif radio (13) du dispositif (10), dans lequel le dispositif de commande (12) relié au dispositif radio (13), en particulier la logique fonctionnelle (12a), compare le signal d'authentification reçu par le dispositif radio (13) dans la logique fonctionnelle (12a) au signal d'authentification détecté par le dispositif de détection (14a, 14b, 14c, 14d) et/ou au signal d'authentification prédéterminé et/ou aléatoire généré par la logique fonctionnelle (12a).

8. Procédé de contrôle de position comportant un système d'autorisation (30) selon l'une des revendications 1 à 7, dans lequel le système d'autorisation (30) comprend au moins un élément d'authentification (1) servant à détecter un mouvement, une vibration et/ou une inclinaison et un dispositif (10) servant à générer un mouvement, une vibration et/ou une inclinaison, et dans lequel le procédé comporte les étapes suivantes :
- la génération de signaux d'authentification sous la forme d'un mouvement et/ou d'une vibration par le dispositif (10),
- dans lequel la génération de signaux d'authentification sous la forme d'un mouvement et/ou d'une vibration comprend la commande dudit au moins un actionneur (11a, 11b, 11c, 11d) du dispositif (10) afin de générer un mouvement et/ou une vibration,
- la détection des signaux d'authentification par l'élément d'authentification (1),
- la transmission des signaux d'authentification détectés de l'élément d'authentification (1) au dispositif (10),
- la comparaison des signaux d'authentification générés aux signaux d'authentification détectés dans le dispositif (10),
- dans lequel, lors d'une comparaison positive, la position de l'élément d'authentification (1) peut être déterminée par rapport à la plage de mouvement et/ou de vibration du dispositif (10),
- dans lequel, lors d'une comparaison négative, la position de l'élément d'authentification (1) est inconnue.

9. Procédé selon la revendication 8,
- dans lequel la détection des signaux d'authentification comprend la détection par le dispositif de traitement et de transmission de signaux (4) de l'élément d'authentification (1) à l'aide de l'élément de détection (3),
- dans lequel la transmission des signaux d'authentification détectés comprend de préférence la transmission par le dispositif de traitement et de transmission de signaux (4) au dispositif de commande (12), en particulier à la logique fonctionnelle (12a), par l'intermédiaire d'une liaison radio de l'interface radio (2) et du dispositif radio (13),
- dans lequel la comparaison des signaux d'authentification générés aux signaux d'authentification détectés comprend de préférence la comparaison des signaux dans le dispositif de commande (12), en particulier dans la logique fonctionnelle (12a).

10. Procédé selon la revendication 8 ou 9, dans lequel le procédé comprend les autres étapes suivantes, qui sont exécutées avant la génération de signaux d'authentification :
- la liaison du dispositif (10) à l'élément d'authentification (1) par établissement d'une liaison radio,
- de préférence, la synchronisation du temps entre l'élément d'authentification (1) et le dispositif (10) par l'intermédiaire de la liaison radio établie, et
- l'activation de l'élément de détection (3) de l'élément d'authentification (1).

11. Procédé selon la revendication 10,
- dans lequel la liaison du dispositif (10) à l'élément d'authentification (1) comprend la liaison du dispositif de commande (12) du dispositif (10) au dispositif de traitement et de transmission de signaux (4) de l'élément d'authentification (1) par établissement d'une liaison radio entre l'interface radio (2) de l'élément d'authentification (1) et le dispositif radio (13) du dispositif (10),
- dans lequel la liaison du dispositif de commande (12) à l'interface radio (2) est de préférence déclenchée par activation d'un élément de déclenchement du dispositif (10),
- dans lequel la synchronisation du temps entre l'élément d'authentification (1) et le dispositif (10) comprend de préférence une synchronisation du temps entre la logique fonctionnelle (12a) du dispositif (10) et le dispositif de traitement et de transmission de signaux (4) de l'élément d'authentification (1) par l'intermédiaire de la liaison radio établie, et
- dans lequel l'activation de l'élément de détection (3) de l'élément d'authentification (1) comprend de préférence une activation de l'élément de détection (3) par le dispositif de traitement et de transmission de signaux (4).

12. Procédé selon l'une des revendications 8 à 11,
- dans lequel, lors de la génération de signaux d'authentification, ledit au moins un actionneur (11a, 11b, 11c, 11d) est commandé par le dispositif de commande (12), dans lequel le dispositif de génération et de détection de signaux (12b) commande de préférence ledit au moins un actionneur (11a, 11b, 11c, 11d) selon l'indication provenant de la logique fonctionnelle (12a) afin de convertir un signal d'authentification en un mouvement et/ou une vibration,
- dans lequel, lors de la génération des signaux d'authentification, ledit au moins un actionneur (11a, 11b, 11c, 11d) est démarré à un instant défini,
- dans lequel, lors de la détection des signaux d'authentification, le dispositif de traitement et de transmission de signaux (4) détecte de préférence les signaux d'authentification détectés par l'élément de détection (3) en fonction du temps synchronisé,
- dans lequel la détection de signaux d'authentification est de préférence effectuée dans une fenêtre temporelle prédéterminée, et
- dans lequel l'étape de comparaison comprend également de préférence une comparaison des signaux d'authentification en fonction du temps.

13. Procédé selon l'une des revendications 8 à 12, dans lequel les étapes suivantes sont exécutées en plus des étapes de génération et de détection des/de signaux d'authentification :
- génération de signaux d'authentification par lecture de la pente ou de l'angle provenant du dispositif de détection (14a, 14b, 14c, 14d) du dispositif (10),
- de préférence, détection de signaux d'authentification par lecture de la pente ou de l'angle provenant de l'élément de détection (3) de l'élément d'authentification (1).

14. Procédé selon l'une des revendications 8 à 13, dans lequel des étapes suivantes sont exécutées en plus de l'étape de comparaison des signaux d'authentification :
- comparaison des signaux d'authentification du dispositif (10) qui sont générés par le dispositif de détection (14a, 14b, 14c, 14d) aux signaux d'authentification de l'élément d'authentification (1) qui sont détectés par l'élément de détection (3), de préférence dans le dispositif de commande (12), en particulier dans la logique fonctionnelle (12a),
- dans lequel, lors d'une comparaison positive, la position de l'élément d'authentification (1) peut être déterminée sur une plage présentant sensiblement la même inclinaison,
- dans lequel, lors d'une comparaison positive, une fonction, en particulier l'autorisation de déplacer un véhicule, est de préférence déclenchée,
- dans lequel, lors d'une comparaison négative, la position de l'élément d'authentification est inconnue, et
- dans lequel, lors d'une comparaison négative, une fonction de sécurité, en particulier une alerte acoustique et/ou optique, est de préférence activée.

15. Procédé selon l'une des revendications 8 à 14, **caractérisé en ce que**
- l'étape de génération de signaux d'authentification par activation dudit au moins un actionneur (11a, 11b, 11c, 11d) comprend une variation pouvant être déterminée du mouvement généré par ledit au moins un actionneur (11a, 11b, 11c, 11d) en fonction du temps, de l'amplitude et/ou de la fréquence,
- l'étape de transmission des signaux d'authentification comprend de préférence un cryptage et/ou une compression des signaux d'authentification,
- lors de la comparaison des signaux d'authentification de l'élément d'authentification (1) aux signaux d'authentification du dispositif (10), les deux données de signaux concordent de préférence lorsque les signaux d'authentification de l'élément d'authentification (1) se situent dans une plage de tolérance définissable autour des signaux d'authentification du dispositif (10),
après la comparaison des signaux d'authentification la liaison radio entre l'interface radio (2) et le dispositif radio (13) est de préférence déconnectée, dans lequel l'élément de détection (3) de l'élément d'authentification (1) est de préférence en outre désactivé par le dispositif de traitement et de transmission de signaux (4).
